# EUROPEAN PATENT APPLICATION

(11) **EP 2 570 466 A1**
(43) Date of publication of application: **20.03.2013**
(21) Application number: 10851435.7
(22) Date of filing: 29.11.2010
(51) Int. Cl.: C09K 3/00, C08G 77/30, C09D 7/12, C09D 183/02

(54) **SURFACE MODIFICATION METHOD AND SURFACE-MODIFIED MATERIAL**

(30) Priority: 11.05.2010 JP 2010109589
(71) Applicant: Shiseido Company, Ltd., Chuo-ku Tokyo 104-8010 (JP)
(72) Inventor: TAKEI, Keigo, Yokohama-shi, Kanagawa 224-8558 (JP); MIYAZAWA, Kazuyuki, Yokohama-shi, Kanagawa 224-8558 (JP)
(74) Representative: Ulmann, Catherine Claire
(86) International application number: PCT/JP2010/071266
(87) International publication number: WO 2011/142053

(57) **Abstract**

A surface modification method in the present invention is characterized by having a step of applying an application fluid including a compound represented by a general formula of: 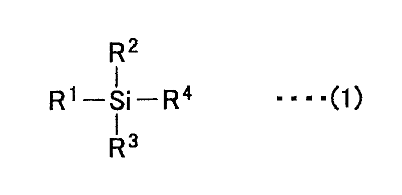 (in the formula, each of R¹, R², and R³ is independently an alkoxy group with a carbon number of 1 or more and 6 or less and R⁴ is an alkoxy group with a carbon number of 1 or more and 6 or less or an alkyl group with a carbon number of 1 or more and 6 or less.) and a hydrophilization agent having a functional group capable of producing a silanol group through hydrolysis thereof or a silanol group onto a material having a functional group capable of producing a silanol group through hydrolysis thereof or a silanol group on a surface thereof.

## Description

### TECHNICAL FIELD

The preset invention relates to a surface modification method and a surface modification material.

### BACKGROUND ART

Conventionally, a polymer having a phosphorylcholine group is known as a biocompatible polymer, and a biocompatible material in which each kind of a resin material is coated with such a polymer is known.

Meanwhile, a method for modifying a material surface by reacting a compound having a phosphorylcholine group with a surface material is known.

Patent document 1 discloses a method for covalently bonding a phosphorylcholine group to a surface of an ophthalmic lens material by a post-treatment for reacting a compound having a phosphorylcholine group to an ophthalmic lens material.

However, it is desired that a phosphorylcholine group is introduced onto a material surface at a higher density.

### PRIOR ART DOCUMENTS

### PATENT DOCUMENTS

Patent document 1: Japanese Patent Application Publication No. 2006-011380

### SUMMARY OF* THE INVENTION

### PROBLEMS TO BE SOLVED BY THE INVENTION

The present invention aims at providing a surface modification method capable of introducing a phosphorylcholine group onto a material surface at a high density and a surface modification material whose surface has been modified by the surface modification method, while taking a problem involved in the conventional technique(s) described above.

### MEANS FOR SOLVING THE PROBLEM

According to one aspect of the present invention, a surface modification method has a step of applying an application fluid including a compound represented by a general formula of: 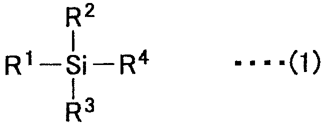 (in the formula, each of R¹, R², and R³ is independently an alkoxy group with a carbon number of 1 or more and 6 or less and R⁴ is an alkoxy group with a carbon number of 1 or more and 6 or less or an alkyl group with a carbon number of 1 or more and 6 or less.) and a hydrophilization agent having a functional group capable of producing a silanol group through hydrolysis thereof or a silanol group onto a material having a functional group capable of producing a silanol group through hydrolysis thereof or a silanol group on a surface thereof.

Furthermore, according to one aspect of the present invention, a surface modification method is characterized by having a step of applying an application fluid including a compound represented by a general formula of: 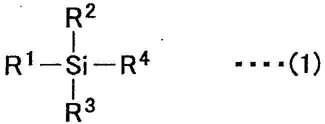 (in the formula, each of R¹, R², and R³ is independently an alkoxy group with a carbon number of 1 or more and 6 or less and R⁴ is an alkoxy group with a carbon number of 1 or more and 6 or less or an alkyl group with a carbon number of 1 or more and 6 or less.) onto a material having a functional group capable of producing a silanol group through hydrolysis thereof or a silanol group on a surface thereof and a step of applying an application fluid including a hydrophilization agent having a functional group capable of producing a silanol group through hydrolysis thereof or a silanol group onto the material on which the application fluid has been applied.

### EFFECTS OF THE INVENTION

Due to a surface modification method according to the present invention, it becomes possible to introduce a phosphorylcholine group onto a material surface at a high density and it becomes possible to obtain a surface modification material having a phosphorylcholine group on a surface thereof at a high density.

### BRIEF DESCRIPTION OF THE DRAWINGS

FIG. 1 is a diagram illustrating evaluation results of an amount of an introduced phosphorylcholine group in Practical example 1 and Comparative example 1.
FIG. 2 is a diagram illustrating evaluation results of an amount of an adsorbed FITC-labeled BSA in Practical example 1 and Comparative example 1.

### EMBODIMENTS FOR IMPLEMENTING THE INVENTION

Next, an embodiment for implementing the present invention will be described in conjunction with the drawings.

A surface modification method according to a first embodiment of the present invention has a step of applying an application fluid including a compound represented by general formula (1) and a hydrophilization agent having a functional group capable of producing a silanol group through hydrolysis thereof or a silanol group onto a material having a functional group capable of producing a silanol group through hydrolysis thereof or a silanol group on a surface thereof.

In the present embodiment, when an application fluid including a compound represented by general formula (1) and a hydrophilization agent is applied on a material, the compound represented by general formula (1) (, the material, and/or the hydrophilization agent) is (is/are) hydrolyzed to produce a silanol group. Furthermore, silanol groups are dehydrated or condensed with one another whereby many silanol groups are introduced onto a material surface. It is possible to introduce a hydrophilization agent onto a material surface at a high density, because a silanol group introduced onto a material surface and a silanol group possessed by a hyrophilization agent (or produced on a hydrophilization agent) are thus dehydrated or condensed.

Specifically, after an application fluid is applied onto a material, water, an acid, or an alkali is applied thereto or heating is conducted. Alternatively, after water, an acid, or an alkali is applied onto a material, an application fluid may be applied thereto. Furthermore, water, an acid, or an alkali may be mixed into an application fluid. In such a case, it is preferable to prepare an application fluid at time of application appropriately, because hydrolysis occurs in an application fluid. Additionally, when water, an acid, or an alkali is used, reaction usually proceeds sufficiently at room temperature although heating may be conducted. Furthermore, even if water, an acid, or an alkali is not used, reaction gently proceeds due to moisture in the atmosphere.

An acid or alkali to be used for hydrolysis is not particularly limited as long as it is possible to cause hydrolysis, and it is possible to mix and use two or more kinds thereof. Furthermore, use thereof may be conducted as an aqueous solution.

It is possible to use an application fluid in which a compound represented by general formula (1) and a hydrophilization agent is dissolved or dispersed in an organic solvent. For an organic solvent, there is provided an aliphatic hydrocarbon, an aromatic hydrocarbon, a chlorinated hydrocarbon, an ether, an alcohol such as a mono- to tri-hydric aliphatic alcohol with a carbon number of 1 - 4, a cellosolve such as ethyl cellosolve or butyl cellosolve, a dioxane, methyl acetate, diformamide, or the like.

A mass ratio of a compound represented by a general formula (1) to a hydrophilization agent is usually 0.01 - 1 and 0.1 - 0.7 is preferable. If such a mass ratio is less than 0.01, it may be difficult to introduce a hydrophilization agent onto a material surface at a high density, and if it is greater than 1, an amount of an unreacted silanol group remaining on a surface material may increase.

A method for applying an application fluid is not particularly limited and there is provided a dip coating method, a spray coating method, a spin cast method, or the like.

A surface modification method according to a second embodiment of the present invention has a step of applying an application fluid including a compound represented by general formula (1) onto a material having a functional group capable of producing a silanol group through hydrolysis thereof or a silanol group on a surface thereof and a step of applying an application fluid including a hydrophilization agent having a functional group capable of producing a silanol group through hydrolysis thereof or a silanol group onto the material on which the application fluid has been applied.

In the present embodiment, it is also possible to introduce a hydrophilization agent onto a material surface at a high density, because many silanol groups are introduced onto a material surface.

Specifically, after an application fluid including a compound represented by general formula (1) and an application fluid including a hydrophilization agent are applied onto a material, water, an acid, or an alkali is applied thereto or heating is conducted. Alternatively, after water, an acid, or an alkali is applied onto a material, an application fluid including a compound represented by general formula (1) and an application fluid including a hydrophilization agent may be applied thereto. Furthermore, water, an acid, or an alkali may be mixed into an application fluid including a compound represented by general formula (1) and an application fluid including a hydrophilization agent. In such a case, it is preferable to prepare an application fluid(s) at time of application appropriately, because hydrolysis occurs in an application fluid(s). Additionally, when water, an acid, or an alkali is used, reaction usually proceeds sufficiently at room temperature, although heating may be conducted. Furthermore, even if water, an acid, or an alkali is not used, reaction gently proceeds due to moisture in the atmosphere.

An acid or alkali to be used for hydrolysis is not particularly limited as long as it is possible to cause hydrolysis, wherein it is possible to mix and use two or more kinds thereof and use thereof as an aqueous solution may be conducted.

It is possible to use an application fluid in which a compound represented by general formula (1) or a hydrophilization agent is dissolved or dispersed in an organic solvent. For an organic solvent, there is provided an aliphatic hydrocarbon, an aromatic hydrocarbon, a chlorinated hydrocarbon, an ether, an alcohol such as a mono- to tri-hydric aliphatic alcohol with a carbon number of 1 - 4, a cellosolve such as ethyl cellosolve or butyl cellosolve, a dioxane, methyl acetate, diformamide, or the like.

A mass ratio of a compound represented by general formula (1) to a hydrophilization agent is usually 0.01 - 1 and 0.1 - 0.7 is preferable. If such a mass ratio is less than 0.01, it may be difficult to introduce a hydrophilization agent onto a material surface at a high density, and if it is greater than 1, an amount of an unreacted silanol group remaining on a material surface may increase.

A method for applying an application fluid is not particularly limited and there is provided a dip coating method, a spray coating method, a spin cast method, or the like.

For a specific example of a compound represented by general formula (1), there is provided a tetraethyl orthosilicate in which R¹, R², R³, and R⁴ are ethoxy groups.

A functional group capable of producing a silanol group through hydrolysis thereof possessed by a hydrophilization agent is not particularly limited and there is provided a hydrosilyl group, an alkoxysilyl group, a halosilyl group, an acyloxysilyl group, an aminosilyl group, or the like. As the reactivity of a hydrophilization agent is taken into consideration, an alkoxysilyl group with a carbon number of 1 - 6 is preferable and a methoxysilyl group or an ethoxysilyl group is more preferable.

It is preferable for a hydrophilization agent to have a functional group represented by general formula (2): 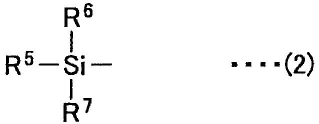 (in the formula, R⁵ is an alkoxy group with a carbon number of 1 or more and 6 or less or a hydroxy group and each of R⁶ and R⁷ is independently an alkoxy group with a carbon number of 1 or more and 6 or less, a hydroxy group, or an alkyl group with a carbon number of 1 or more and 6 or less.), when a reactivity thereof is taken into consideration.

It is preferable for a hydrophilization agent having a functional group represented by general formula (2) to be a compound represented by general formula (3): 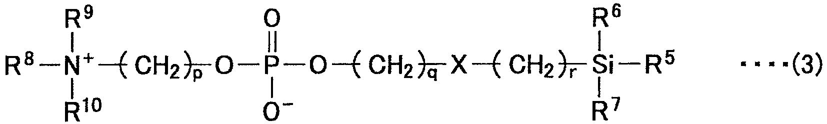 (in the formula, each of R⁸, R⁹, and R¹⁰ is independently an alkyl group with a carbon number of 1 or more and 6 or less, X is an amide linkage, an ester linkage, an imino group, an oxy group, an urea linkage, an urethane linkage, or a single bond, and each of p and q is independently an integer of 1 or more and 6 or less.). Thereby, it is possible to suppress adsorption of a protein or polypeptide effectively and it is possible to obtain a material excellent in a biocompatibility thereof. For a specific example of a compound represented by general formula (3), there is provided a compound represented by a chemical formula of:

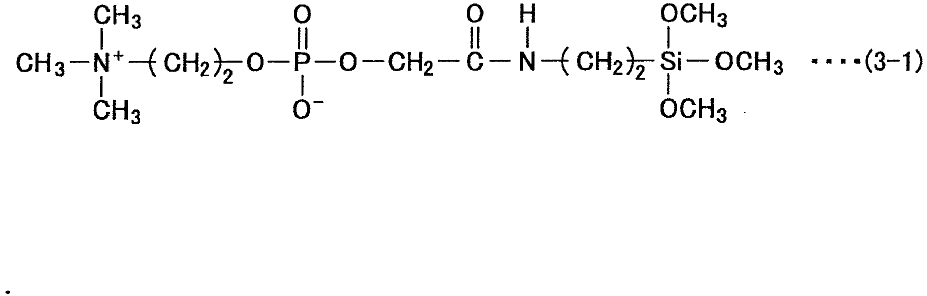

Furthermore, for a hydrophilization agent having a functional group represented by general formula (2) other than a compound represented by general formula (3), it is possible to use a compound represented by a general formula of: 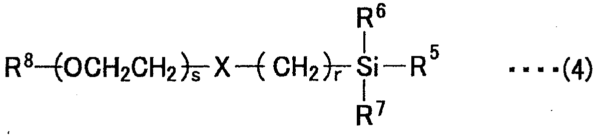 (in the formula, X is similar to that of a compound represented by general formula (3), R⁸ is a hydrogen atom or an alkyl group with a carbon number of 1 - 6, r is an integer of 1 - 6, and s is an integer of 1 - 100.).

For a specific example of a compound represented by general formula (4), there is provided N-(3-triethoxysilylpropyl)-O-polyethyleneoxide urethane represented by a chemical formula of: 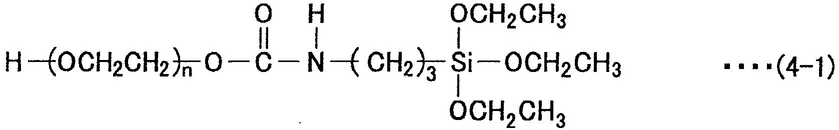 (produced by Gelest, Inc.).

Furthermore, for a hydrophilization agent having a functional group represented by general formula (2) other than a compound represented by general formula (3), it is possible to use a compound represented by a general formula of: 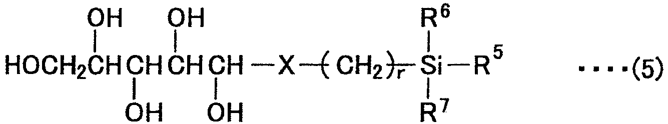 (in the formula, X is similar to that of a compound represented by general formula (3) and r is an integer of 1 - 6.).

For a specific example of a compound represented by general formula (5), there is provided N-(3-triethoxysilylpropyl)gluconamide represented by a chemical formula of:

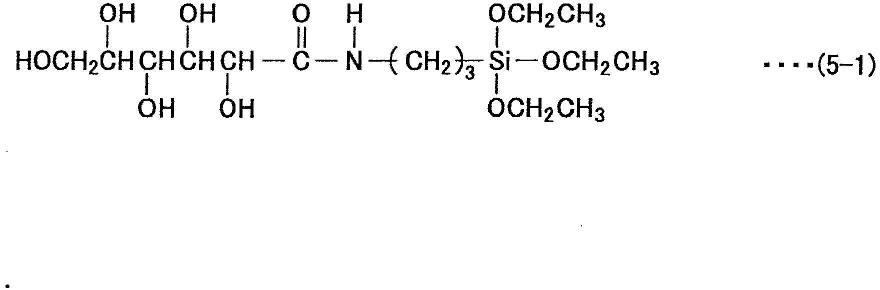

Furthermore, for a hydrophilization agent having a functional group represented by general formula (2) other than a compound represented by general formula (3), it is possible to use a compound represented by a general formula of: 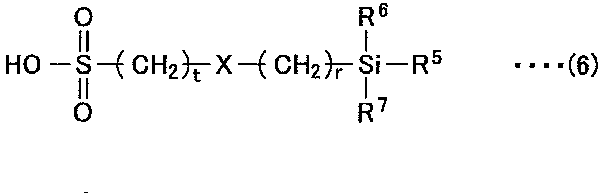 (in the formula, X is similar to that of a compound represented by general formula (3) and each of r and t is independently an integer of 1 - 6, wherein a sum of r and t is an integer of 2 - 12 in a case where X is a single bond.).

For a specific example of a compound represented by general formula (6), there is provided a compound represented by a chemical formula of:

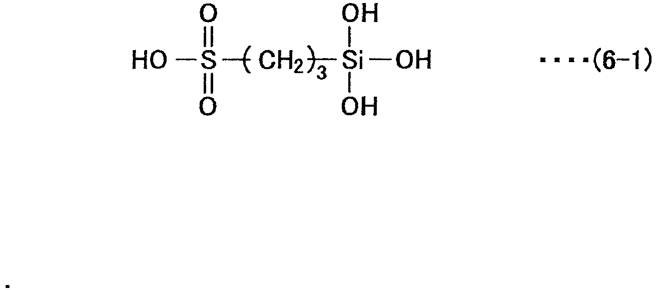

Additionally, two or more kinds of hydrophilization agents described above may be used in combination.

A material with a surface to be modified is not particularly limited as long as such a surface has a functional group capable of producing a silanol group through hydrolysis thereof or a silanol group. There is provided a glass such as a borosilicate glass or a soda lime glass; a quartz, a silica, or the like.

A shape of a material with a surface to be modified is not particularly limited and there is provided a sheet shape, a particle shape, a tube shape, or the like.

Furthermore, for a material with a surface to be modified, a material with a surface on which a functional group capable of producing a silanol group through hydrolysis thereof or a silanol group has been introduced by preliminarily applying a surface treatment may be used.

A surface treatment method is not particularly limited and there is provided a method for applying an application fluid containing a polymer having a functional group capable of producing a silanol group through hydrolysis thereof and an alkoxysilane onto a material (see Japanese Patent Application Publication No. 2009-101318), a method for forming a silicone polymer coating (see Japanese Examined Patent Application No. 1-054379, Japanese Examined Patent Application No. 1-054380, or Japanese Examined Patent Application No. 1-054381) or the like.

When a silicone polymer coating is formed, for example, 1,3,5,7-tetramethylcyclotetrasiloxane and a material are put into a desiccator and degassed by an aspirator and reaction is subsequently caused at 80 °C for 16 hours.

A material capable of forming a silicone polymer coating is not particularly limited and there is provided a styrene-divinylbenzene copolymer, a mica, a talc, a kaolin, an alumina, a titanium oxide, a zinc oxide, an iron oxide, or the like.

For yet another surface treatment method, there is provided a method for forming a film including a silicone resin having a silanol group.

For a film including a silicone resin having a silanol group, it is preferable for a contact angle of water to be 3 - 8°. Thereby, it is possible to introduce a hydrophilization agent onto a material surface at a higher density.

It is possible to form a film including a silicone resin having a silanol group by applying an application fluid including a silicone resin.

A silicone resin included in an application fluid is not particularly limited and there is provided a resin obtained by hydrolyzing and subsequently condensing an alkoxysilane represented by a general formula of:

(R¹O)ₙSi (R²)₄₋ₙ

(in the formula, each of R¹ and R² is independently an alkyl group with a carbon number of 1 - 8 and n is an integer of 1 - 4, wherein plural R² may be identical or different in a case where n is 1 or 2 and plural R¹ may be identical or different in a case where n is 2 or 3.). Furthermore, two or more kinds of such resins may be used in combination. Herein, a silicone resin having a silanol group included in a film in which a contact angle of water is 3 - 8° may be identical to or different from a silicone resin included in an application fluid.

An organic solvent included in an application fluid is not particularly limited and there is provided an aliphatic hydrocarbon, an aromatic hydrocarbon, a chlorinated hydrocarbon, an ether, an alcohol such as a mono- to tetra-hydric aliphatic alcohol with a carbon number of 1 - 4, a cellosolve such as ethyl cellosolve or butyl cellosolve, a dioxane, methyl acetate, diformamide, or the like, wherein two or more kinds thereof may be used in combination.

A method for applying an application is not particularly limited and there is provided a dip coating method, a spray coating method, a spin cast method, or the like.

A material capable of forming a film including a silicone resin having a silanol group is not particularly limited and there is provided an organic material such as a polycarbonate, a polyethylene terephthalate, a polystyrene, or an acryl resin; an inorganic material such as a gold, a titanium, an aluminum, an iron, a copper, a stainless steel, an alumina, a titanium oxide, a zinc oxide, or the like.

It is possible to apply a surface modification material with a surface which has been modified by a surface modification method according to the present invention to an application such as a cosmetic material, a medical material such as an artificial organ or a surgical tool, a packing material for chromatography, an affinity particle, or a paint.

### PRACTICAL EXAMPLES

### [Practical example 1]

After a fluid in which 0.6 g of a compound represented by chemical formula (3-1), 0.4 mL of tetraethyl orthosilicate, 1 mL of 1 M hydrochloric acid, and 10 mL of methanol were mixed was applied onto a cover glass, drying was conducted at room temperature for 1 hour. Then, after water washing was conducted, drying was conducted to obtain a surface modification glass.

### [Comparative example 1]

After a fluid in which 0.6 g of a compound represented by chemical formula (3-1), 1 mL of 1 M hydrochloric acid and 10 mL of methanol were mixed was applied onto a cover glass, drying was conducted at room temperature for 1 hour. Then, after water washing was conducted, drying was conducted to obtain a surface modification glass.

### [Amount of an introduced phosphorylcholine group]

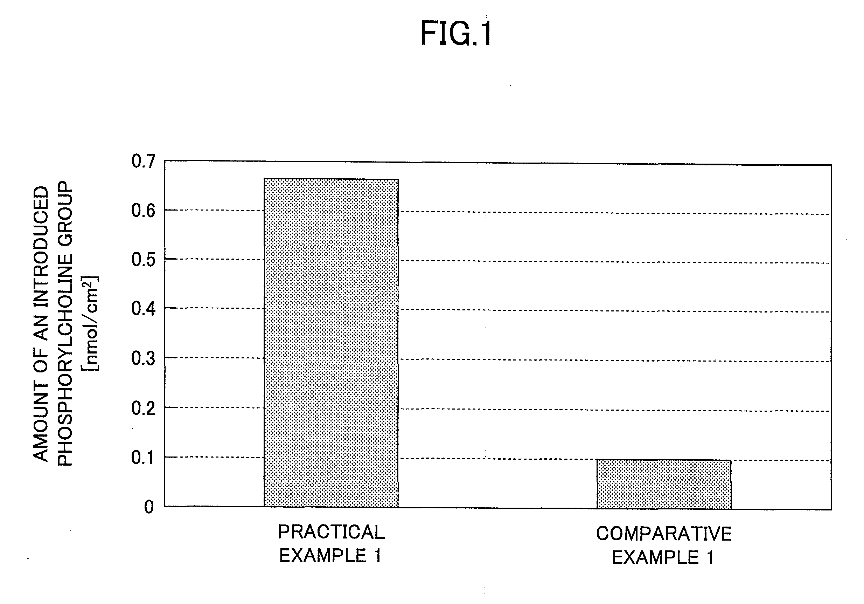

Amounts of an introduced phosphorylcholine group of the surface modification glasses in Practical example 1 and Comparative example 1 were calculated by using a molybdenum blue method to quantify phosphorus therein. Specifically, after the surface modification materials in Practical example 1 and Comparative example 1 were first dipped in 60% by mass of perchloric acid which was heated at 180 °C for 1 hour, an aqueous solution of hexaammonium heptamolybdate and L(+)-ascorbic acid were added thereto to cause color development at 100 °C for 5 minutes. Then, an absorbance of color-developed fluid at 710 nm was measured to calculate an amount of an introduced phosphorylcholine group. Evaluation results are illustrated in FIG. 1.

From FIG. 1, it is found that a phosphorylcholine group on the surface modification material in Practical example 1 was/were introduced at a high density, as compared to the surface modification material in Comparative example 1.

### [Amount of an adsorbed FITC-labeled BSA]

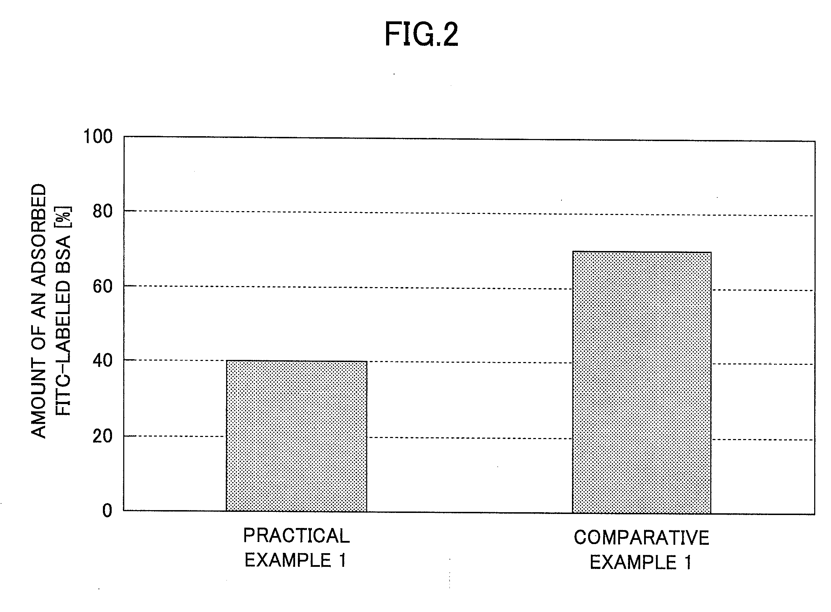

The surface modification glasses in Practical example 1 and Comparative example 1 and an untreated cover glass were dipped in 1 mL of 1 mg/mL phosphate buffer solution of FITC-labeled bovine serum albumin (BSA) and left at room temperature for 2 hours. Then, after washing with a phosphate buffer was conducted 5 times, intensities of fluorescence for the surface modification glasses and cover glass were measured to calculate amounts of an adsorbed FITC-labeled BSA. Evaluation results are illustrated in FIG. 2. Herein, an amount of an adsorbed FITC-labeled BSA in FIG. 2 is a ratio of an amount of an adsorbed FITC-labeled BSA on the surface modification glass to an amount of an adsorbed FITC-labeled BSA on the untreated cover glass.

From FIG. 2, it is found that that the surface modification material in Practical example 1 suppressed adsorption of a FITC-labeled BSA and was excellent in biocompatibility, as compared to the surface modification material in Comparative example 1.

The present application involves claiming of priority based on Japanese Patent Application No. 2010-109589 filed in May 11, 2010 in Japan, the entire content of which is referred to in the present application.

## Claims

1. A surface modification method **characterized by** having a step of applying an application fluid including a compound represented by a general formula of: 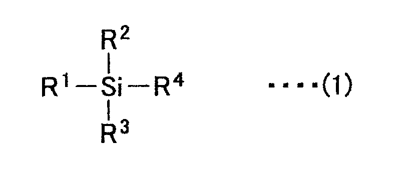 (in the formula, each of R¹, R², and R³ is independently an alkoxy group with a carbon number of 1 or more and 6 or less and R⁴ is an alkoxy group with a carbon number of 1 or more and 6 or less or an alkyl group with a carbon number of 1 or more and 6 or less.) and a hydrophilization agent having a functional group capable of producing a silanol group through hydrolysis thereof or a silanol group onto a material having a functional group capable of producing a silanol group through hydrolysis thereof or a silanol group on a surface thereof.

2. A surface modification method **characterized by** having a step of applying an application fluid including a compound represented by a general formula of: 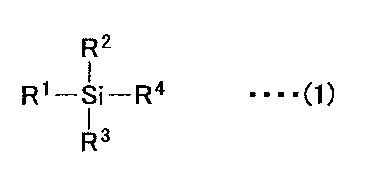 (in the formula, each of R¹, R², and R³ is independently an alkoxy group with a carbon number of 1 or more and 6 or less and R⁴ is an alkoxy group with a carbon number of 1 or more and 6 or less or an alkyl group with a carbon number of 1 or more and 6 or less.) onto a material having a functional group capable of producing a silanol group through hydrolysis thereof or a silanol group on a surface thereof and a step of applying an application fluid including a hydrophilization agent having a functional group capable of producing a silanol group through hydrolysis thereof or a silanol group onto the material on which the application fluid has been applied.

3. The surface modification method as claimed in claim 1, **characterized in that** the hydrophilization agent has a functional group represented by a general formula of: 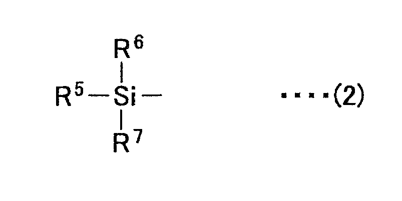 (in the formula, R⁵ is an alkoxy group with a carbon number of 1 or more and 6 or less or a hydroxy group and each of R⁶ and R⁷ is independently an alkoxy group with a carbon number of 1 or more and 6 or less, a hydroxyl group, or an alkyl group with a carbon number of 1 or more and 6 or less.).

4. The surface modification method as claimed in claim 2, **characterized in that** the hydrophilization agent has a functional group represented by a general formula of: 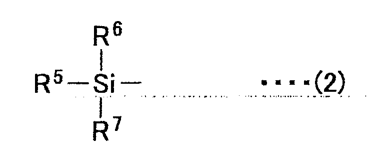 (in the formula, R⁵ is an alkoxy group with a carbon number of 1 or more and 6 or less or a hydroxy group and each of R⁶ and R⁷ is independently an alkoxy group with a carbon number of 1 or more and 6 or less, a hydroxy group, or an alkyl group with a carbon number of 1 or more and 6 or less.).

5. The surface modification method as claimed in claim 3, **characterized in that** the hydrophilization agent is a compound represented by a general formula of: 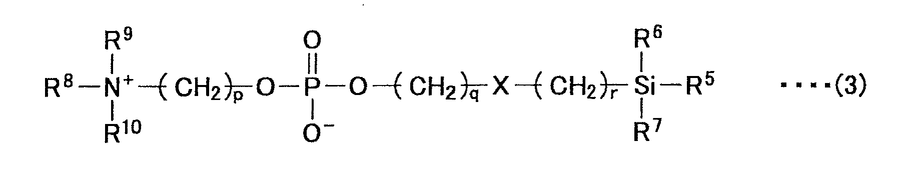 (in the formula, each of R⁸, R⁹, and R¹⁰ is independently an alkyl group with a carbon number of 1 or more and 6 or less, X is an amide linkage, an ester linage, an imino linkage, an oxy group, an urea linkage, an urethane linkage, or a single bond, and each of p and q is independently an integer of 1 or more and 6 or less.).

6. The surface modification method as claimed in claim 4, **characterized in that** the hydrophilization agent is a compound represented by a general formula of: 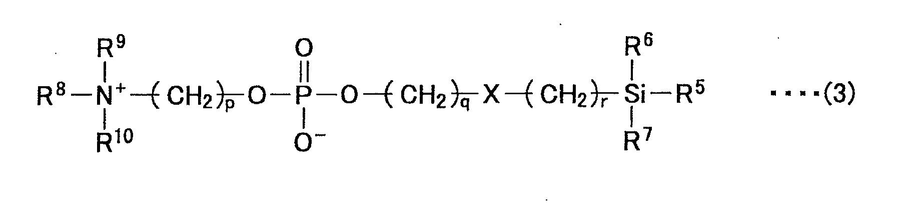 (in the formula, each of R⁸, R⁹, and R¹⁰ is independently an alkyl group with a carbon number of 1 or more and 6 or less, X is an amide linkage, an ester linage, an imino linkage, an oxy group, an urea linkage, an urethane linkage, or a single bond, and each of p and q is independently an integer of 1 or more and 6 or less.).

7. A surface modification material **characterized in that** a surface thereof has been modified by the surface modification method as claimed in claim 1.

8. A surface modification material **characterized in that** a surface thereof has been modified by the surface modification method as claimed in claim 2.
